# EUROPEAN PATENT SPECIFICATION

(11) **EP 3 412 746 B1**
(45) Date of publication and mention of the grant of the patent: **09.03.2022**
(21) Application number: 17747187.7
(22) Date of filing: 17.01.2017
(51) Int. Cl.: C09K 5/06

(54) **HEAT STORAGE PARTICLES, METHOD FOR PRODUCING SAME, AND HEAT STORAGE MATERIAL**
WÄRMESPEICHERTEILCHEN, VERFAHREN ZUR HERSTELLUNG DAVON UND WÄRMESPEICHERSTOFF
PARTICULES DE STOCKAGE DE CHALEUR, PROCÉDÉ DE PRODUCTION DE CELLES-CI ET MATÉRIAU DE STOCKAGE DE CHALEUR

(30) Priority: 04.02.2016 JP 2016020129
(43) Date of publication of application: 12.12.2018
(73) Proprietor: Negami Chemical Industrial Co., Ltd., Nomi-shi, Ishikawa 929-0125 (JP)
(72) Inventor: MATSUDA, Nobuhiro, Tokyo 105-8640 (JP); TSUYUKI, Ryota, Tokyo 105-8640 (JP); AZECHI, Motohisa, Tokyo 105-8640 (JP); KANAE, Kentaro, Tokyo 105-8640 (JP); KATAGIRI, Takashi, Tokyo 105-8640 (JP); NISHITA, Keiko, Nomi-shi Ishikawa 929-0125 (JP); HASEGAWA, Kei, Nomi-shi Ishikawa 929-0125 (JP)
(74) Representative: TBK
(86) International application number: PCT/JP2017/001389
(87) International publication number: WO 2017/135025

(56) References cited:
- WO-A1-2015/122460
- JP-A- H10 311 693
- JP-A- 2003 003 158
- JP-A- 2003 003 158
- JP-A- 2009 148 676
- JP-A- 2016 034 622
- US-A- 4 708 812
- US-A1- 2012 148 845
- Carmen Joana Gomes Matos ET AL: "Synthesis of microcapsules for polyurethane foams", , 1 December 2014 (2014-12-01), pages 1-9, XP055613204, Retrieved from the Internet: URL:https://fenix.tecnico.ulisboa.pt/downl oadFile/1689244997255333/Resumo%20alargado ,%20Carmen%20Matos.pdf [retrieved on 2019-08-15]

## Description

### Technical Field

The present invention relates to heat storage particles, a method for producing the same, and a heat storage material including heat storage particles.

### Background Art

### Citation List

### Patent Literature

[PTL 1] Japanese Unexamined Patent Application, First Publication No. H07-204491
[PTL 2] Japanese Unexamined Patent Application, First Publication No. H10-137577
[PTL 3] Japanese Unexamined Patent Application, First Publication No. 2001-288458
[PTL 4] US 4 708 812 A
[PTL 5] JP 2003 003158 A
[PTL 6] US2012/148845 A1

### Non-patent literature

[NPTL 1] Carmen Joana Gomes Mates ET AL: "Synthesis of microcapsules for polyurethane foams", December 1, 2014, page 1 to 9.

Heat storage materials include a latent heat storage material using latent heat (transition heat) accompanying a change (phase transition) in the physical state of a substance, a sensible heat storage material using the specific heat of a substance not accompanying a change in the physical state of a substance, a chemical heat storage material using input or output of heat accompanying a chemical change of a substance, a heat storage material obtained by combining these materials, and the like.

As such a heat storage material, capsule type heat storage particles in which a material for heat storage is enclosed in a shell which prevents volatilization and exudation of a material for heat storage are known. The heat storage particles have an advantage that a mixture containing the heat storage particles in another material (a building material, a medium, or the like) can be used as a heat storage material.

As capsule type heat storage particles in which a material such as a material for heat storage is enclosed in a shell, for example, the following have been proposed.
(1) Heat feeding microcapsules having a particle diameter of 10 µm or less and produced by forming a film material such as polystyrene, polyacrylonitrile, polyamide, polyacrylamide, ethylcellulose, or polyurethane around a material for heat storage by an interfacial polymerization method using an emulsifier having a specific molecular weight, an in-situ method, or the like (PTL 1);
(2) Microcapsules having an average particle diameter of 1 to 15 µm and produced by dispersing a hydrophobic liquid (a coloring agent or the like) in a hydrophilic liquid by a centrifugal force, and forming a wall film of polyamide, epoxy resin, polyurethane, polyurea, or the like around the hydrophobic liquid by an interfacial polymerization method at the interface between the hydrophobic liquid and the hydrophilic liquid (PTL 2); and
(3) Powder having heat storage performance made of a solid material of microcapsules having an average particle diameter of 0.5 to 50 µm and produced by forming a film of melamine resin, urea formalin resin, or the like by an in-situ method or a film of polyurethane, nylon, polyurea, or the like by an interfacial polymerization method, around a material for heat storage (PTL 3).
PTL 4 is directed to the process for preparing a solid phase change material. The particles having a diameter between 100 and 500 mm comprise a core portion containing a material for heat storage and a shell portion containing polyurethane urea. In PTL 5, a thermal storage medium microcapsule is obtained by coating an ester compound prepared by carrying out a condensing reaction of a 12-18C fatty acid compound with an aliphatic alcohol compound with a polyurea or a polyurethaneurea resin film. PTL 6 discloses heat storage microcapsules encapsulating a water-soluble heat storage material stably and certainly, heat storage microcapsules with high durability which prevent phase separation of an inorganic salt hydrate latent heat storage material, heat storage microcapsules which prevent supercooling of a latent heat storage material to exhibit stable heat history and a manufacturing method thereof. The heat storage microcapsules comprise a core covered with a shell, wherein the core contains (a) at least one water-soluble latent heat storage material selected from a salt hydrate and a sugar alcohol and (b) a polymer derived from a water-soluble monomer mixture or a water-soluble monofunctional monomer and a water-soluble multifunctional monomer, and the shell is composed of a hydrophobic resin. In NPL 1, microcapsules (MCs) of polyurethane-polyurea shell and polyamide shell have been synthesized by microemulsion/interfacial polymerization technique and microspheres (or multinucleated MCs) of silica-based shell via microemulsion/sol-gel. Capsules of polyurethane-polyurea shell and polyamide shell contain, in the core, diethylene glycol and water, while capsules of silica-base shell contain glycerol and very small amounts of water.

### Summary of Invention

### Technical Problem

Conventional capsule type particles have the following problems.
- A material for heat storage in a shell is easily exuded by repeating heating and cooling.
- Since the mechanical strength of a shell is low, the shell is easily damaged by compression and the like.
- The average particle diameter is about 50 µm at most. In a case where the particle diameter is small, the ratio of the shell increases, the ratio of the material for heat storage decreases. Thus, the heat storage amount is insufficient.

The present invention provides heat storage particles in which a material for heat storage is not easily exuded and which has high mechanical strength and a large heat storage amount, a method for producing the same, and a heat storage material capable of maintaining a large heat storage amount for a long period of time and having good external appearance.

### Solution to Problem

The present invention has the following aspects.

### <1> Heat storage particles including:

a core portion containing a material for heat storage; and
a shell portion containing polyurethane polyurea,
in which a volume average particle diameter is 100 to 500 µm,
the polyurethane polyurea has a constitutional unit derived from a modified aliphatic polyisocyanate of an isocyanurate type.

### Advantageous Effects of Invention

In the heat storage particle of the present invention, the material for heat storage is not easily exuded, the mechanical strength is high, and the heat storage amount is large.

According to the method for producing the heat storage particles of the present invention, it is possible to produce heat storage particles in which the material for heat storage is not easily exuded and which has high mechanical strength and a large heat storage amount.

The heat storage material of the present invention is capable of maintaining a large heat storage amount for a long period of time and has good external appearance.

### Brief Description of Drawings

FIG. 1 is a cross-sectional view showing an example of a heat storage particle according to the present invention.
FIG. 2 is a cross-sectional view showing a coating wall which is an example of a heat storage material according to the present invention.

### Description of Embodiments

The definitions of the following terms are applied throughout the specification and claims.

The term "polyurethane polyurea" means a polymer compound having a urethane bond (-NHC(O)O-) and a urea bond (-NHC(O)NH-).

The term "polybutadiene polyol" means a compound having a polybutadiene structure and a plurality of hydroxy groups.

The term "volume average particle diameter" means a volume-based median diameter measured using a laser diffraction type particle size distribution measuring device.

The term "constitutional unit" means a monomer unit constituting a polyurethane polyurea.

### <Heat Storage Particle>

A heat storage particle of the present invention is a capsule type particle in which a material for heat storage is enclosed in a shell.

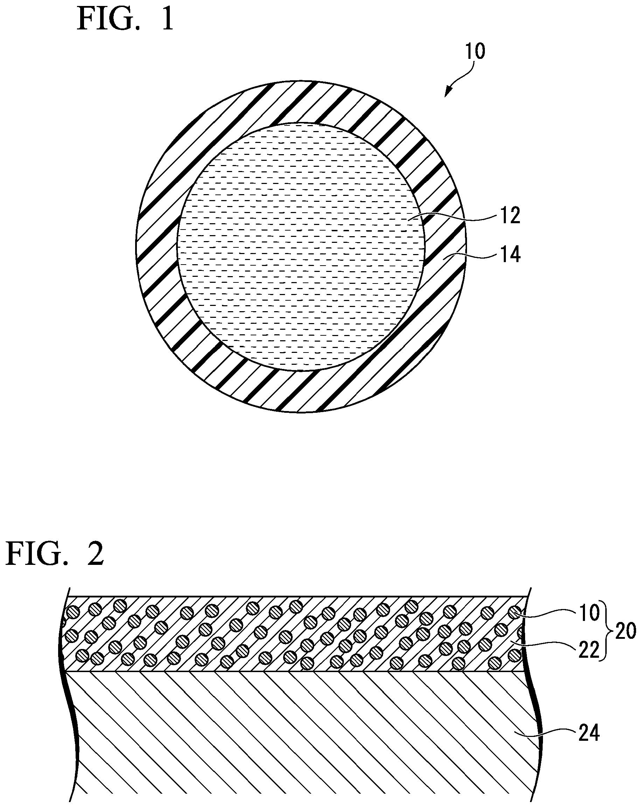

FIG. 1 is a cross-sectional view showing an example of a heat storage particle according to the present invention. A heat storage particle 10 has a core portion 12 containing a material for heat storage and a shell portion 14 covering the core portion 12 and containing polyurethane polyurea. The heat storage particle of the present invention may have an outermost layer on the outside of the shell portion if necessary in a range in which the effects of the present invention are not impaired.

The volume average particle diameter of the heat storage particles is 100 to 500 µm, preferably 110 to 450 µm, and more preferably 120 to 400 µm. In a case where the volume average particle diameter of the heat storage particles is equal to or greater than the lower limit of the above range, the heat storage amount of the heat storage particle becomes sufficiently large. In addition, the material for heat storage of the core portion is not easily exuded even in a case of repeating heating and cooling. Further, the mechanical strength of the shell portion is increased and the shell portion is not easily damaged by compression or the like. In a case where the volume average particle diameter of the heat storage particles is equal to or less than the upper limit of the above range, in a case where a heat storage material including the heat storage particles and another material (a building material, a medium, or the like) is made, the heat storage particles are not noticeable and the external appearance of the heat storage material is good.

The volume average particle diameter of the heat storage particles can be decreased by, for example, increasing the content of a dispersing agent in a dispersion medium in a method for producing the heat storage particles described later and the volume average particle diameter can be decreased by increasing the content of the dispersing agent.

Examples of the shape of the heat storage particle include a spherical shape, a partially distorted spherical shape, a roly-poly shape, a cylindrical shape, a spherical shape, a conical shape, and a rectangular parallelepiped shape.

The content of the material for heat storage in the heat storage particle is preferably 30% to 99.9% by mass, more preferably 50% to 99% by mass, and even more preferably 70% to 99% by mass with respect to 100% by mass of the heat storage particles from the viewpoint of the mechanical strength of the shell portion and the heat storage amount of the core portion.

The thickness of the shell portion is preferably 2 to 20 µm and more preferably 4 to 15 µm from the viewpoint of the mechanical strength and thermal conductivity of the shell portion. The thickness can be measured using a scanning type electron microscope (SEM).

### (Core Portion)

The core portion includes a material for heat storage. The core portion may include other components, if necessary, in a range in which the effects of the present invention are not impaired.

Examples of the material for heat storage include (i) a substance that causes a state change (phase transition) from liquid to solid or vice versa in the use temperature range of a heat storage material, (ii) a substance having a large specific heat in the use temperature range of a heat storage material (an amount of heat required for increasing the temperature of a substance by unit temperature), and (iii) a substance that causes a chemical change accompanying input/output of heat in the use temperature range of a heat storage material.

A heat storage material including heat storage particles formed by using the material for heat storage of (i) becomes a latent heat storage material using latent heat (transition heat) accompanying phase transition and thus the transition heat can be stored as thermal energy or thermal energy can be extracted as transition heat.

A heat storage material including heat storage particles formed by using the material for heat storage of (ii) becomes a sensible heat storage material using the specific heat of the substance and thus the amount of heat required for a change in the temperature of the substance can be stored or extracted.

A heat storage material including heat storage particles formed by using the material for heat storage of (iii) becomes a chemical heat storage material using input or output of heat accompanying a chemical change of the substance.

As the material for heat storage, the material for heat storage of (i) is preferable from the viewpoint that the heat storage density is high compared to the sensible heat storage material, the temperature of supply or absorption of heat is constant, the supply or absorption of heat is easily controlled compared to the chemical heat storage material, and a latent heat storage material can be stably and safely obtained.

As the material for heat storage, from the viewpoint of easily producing heat storage particles by the production method described later, an organic compound is preferable and a liquid organic substance at the temperature at the time of production is more preferable.

As the material for heat storage, from the viewpoint that a latent heat storage material having a large heat storage amount can be obtained and the heat storage particles are easily produced, at least one selected from the group consisting of saturated hydrocarbon, fatty acid, fatty acid metal salt, fatty acid ester, aliphatic ether, aliphatic ketone, and aliphatic alcohol is preferable.

As the saturated hydrocarbon, from the viewpoint that the phase transition temperature is useful as the use temperature of the heat storage material, a saturated hydrocarbon having 7 to 60 carbon atoms is preferable.

As the saturated hydrocarbon, from the viewpoint of a large latent heat amount, a linear saturated hydrocarbon is preferable.

Saturated hydrocarbons are classified into a relatively low molecular weight saturated hydrocarbon (a) and a relatively high molecular weight petroleum wax (b).

The number of carbon atoms of the saturated hydrocarbon (a) is preferably 7 to 24 and more preferably 11 to 20 from the viewpoint that the phase transition temperature is useful as the use temperature of the heat storage material. The number of carbon atoms of the saturated hydrocarbon (a) may be appropriately selected from the above range according to the use temperature of the heat storage material.

The saturated hydrocarbon (a) may be linear or branched, and from the viewpoint of a large latent heat amount, a linear saturated hydrocarbon is preferable.

As the saturated hydrocarbon (a), from the viewpoint of widening to the use temperature range of the heat storage material, a saturated hydrocarbon having a melting point in a temperature range of -20°C to 50°C is preferable.

The melting point is an extrapolation melting starting temperature (Tim) at the crystal melting peak as measured by a differential scanning calorimeter (DSC) according to JIS K 7121.

As the saturated hydrocarbon (a), n-undecane (-21°C), n-dodecane (-12°C), n-tridecane (-5°C), n-tetradecane (6°C), n-pentadecane (9°C), n-hexadecane (18°C), n-heptadecane (21°C), n-octadecane (28°C), n-nonadecane (32°C), n-icosane (37°C), n-henicosane (41°C), and n-docosane (46°C) are preferable. The temperatures in the parentheses are the melting points.

As the petroleum wax (b), from the viewpoint of latent heat amount and availability, a petroleum wax having 20 to 40 carbon atoms is preferable.

Examples of the petroleum wax (b) include paraffin wax and microcrystalline wax.

Paraffin wax is a saturated hydrocarbon which is solid at room temperature and is produced by separation and purification from distillate of vacuum distillation using petroleum or natural gas as a raw material.

As the paraffin wax, from the viewpoint of latent heat amount and availability, a paraffin wax having 20 to 40 carbon atoms is preferable.

Examples of commercially available products of the paraffin wax include HNP-9, HNP-51, FNP-0090, and FT115 manufactured by NIPPON SEIRO CO., LTD.

Microcrystalline wax is a saturated hydrocarbon which is solid at room temperature and is produced by separation and purification from vacuum distillation residual oil or heavy distillate oil using petroleum as a raw material.

As the microcrystalline wax, from the viewpoint of latent heat amount and availability, a microcrystalline wax having 30 to 60 carbon atoms is preferable.

As the fatty acid, from the viewpoint that the phase transition temperature is useful as the use temperature of the heat storage material, a fatty acid having 8 to 30 carbon atoms is preferable.

The fatty acid may be any of a linear saturated fatty acid, a linear unsaturated fatty acid, a branched saturated fatty acid, and a branched unsaturated fatty acid, and from the viewpoint of a large latent heat amount, a linear saturated fatty acid is preferable.

Examples of the linear saturated fatty acid include octanoic acid, nonanoic acid, decanoic acid (capric acid), dodecanoic acid (lauric acid), tetradecanoic acid (myristic acid), hexadecanoic acid (palmitic acid), octadecanoic acid (stearic acid), eicosanoic acid, docosanoic acid, tetracosanoic acid, hexacosanoic acid, octacosanoic acid, and triacontanoic acid.

As the fatty acid metal salt, a fatty acid metal salt having 8 to 30 carbon atoms is preferable. Examples of the fatty acid metal salt include lithium 12-hydroxystearate, and aluminum 2-ethylhexanoate.

As the fatty acid ester, a fatty acid ester having 5 to 40 carbon atoms is preferable. Examples of the fatty acid ester include butyl lactate, ethyl lactate, methyl oleate, diethyl succinate, ethyl decanoate, methyl decanoate, methyl tetradecanoate, methyl hexadecanoate, methyl octadecanoate, methyl eicosanoate, methyl behenate, butyl dodecanoate, n-hexadecyl palmitate, and stearyl stearate.

As the aliphatic ether, from the viewpoint that the phase transition temperature is useful as the use temperature of the heat storage material, a fatty acid ether having 14 to 60 carbon atoms is preferable.

Examples of the aliphatic ether include heptyl ether, octyl ether, tetradecyl ether, and hexadecyl ether, and from the viewpoint of a large latent heat amount and easy synthesis, an ether having one oxygen atom and having a symmetric structure is preferable.

As the aliphatic ketone, an aliphatic ketone having 5 to 10 carbon atoms is preferable. Examples of the aliphatic ketone include 2-octanone, 3-octanone, 2-nonanone, 3-nonanone, and cycloheptanone.

As the aliphatic alcohol, from the viewpoint that the phase transition temperature is useful as the use temperature of the heat storage material, an aliphatic alcohol having 8 to 60 carbon atoms is preferable.

As the aliphatic alcohol, from the viewpoint of a large latent heat amount, a primary alcohol is preferable.

Examples of the aliphatic alcohol include 2-dodecanol, 1-tetradecanol, 7-tetradecanol, 1-octadecanol, 1-eicosanol, and 1,10-decanediol.

As the material for heat storage, materials formed of saturated hydrocarbons; or a combination of at least one selected from the group consisting of fatty acid ester, aliphatic ketone, aliphatic alcohol, and aliphatic ether, and fatty acid or fatty acid metal salt is preferable.

The materials for heat storage may be used alone or in combination of two or more thereof. From the viewpoint of increasing the latent heat amount at a specific temperature, the materials for heat storage are preferably used alone or in combination of two or more thereof. From the viewpoint of widening the use temperature range of the heat storage material, the materials for heat storage are preferably used in combination of two or more thereof or more preferably used in combination of three or more thereof.

Examples of other components that may be included in the core portion include a resin, rubber, a filler, a function imparting agent, and unavoidable impurities.

Examples of fillers include metals, metal compounds, carbon materials, glass, and minerals.

Examples of function imparting agents include an antioxidant, an antistatic agent, a weatherproofing agent, an UV absorber, an anti-blocking agent, a crystal nucleating agent, a flame retardant, a vulcanizing agent, a vulcanization aid, an antibacterial and antifungal agent, a dispersing agent, a coloring preventing agent, a foaming agent, an antirust agent, a heavy metal deactivator, and a melting point controlling agent (freezing point depressant).

The content of other components is preferably 10 parts by mass or less, more preferably 3 parts by mass or less, and particularly preferably 0 parts by mass with respect to 100 parts by mass of the material for heat storage.

### (Shell Portion)

The shell portion includes polyurethane polyurea. The shell portion may include other components if necessary in a range in which the effects of the present invention are not impaired.

As the polyurethane polyurea, a polyurethane polyurea having a constitutional unit derived from a polyisocyanate and a constitutional unit derived from a polyol may be exemplified. As the polyurethane polyurea, from the viewpoint of further increasing the mechanical strength of the shell portion, a polyurethane polyurea further having a constitutional unit derived from a polyamine is preferable.

Polyisocyanate is a polyfunctional isocyanate having three isocyanate groups.

Examples of the polyfunctional isocyanate include triphenylmethane-4,4',4"-triisocyanate, 1,3,5-triisocyanatobenzene, 2,4,6-triisocyanatotoluen, 2,4,4'-triisocyanate diphenyl ether, 4,4'-dimethyldiphenylmethane-2,2',5,5'-tetraisocyanate, and bifunctional isocyanate trimer.

The polyisocyanates may be used alone or in combination of two or more thereof.

As the polyisocyanate, from the viewpoint that heat storage particles in which the material for heat storage is not easily exuded and which has high mechanical strength can be easily obtained, a modified product of an aliphatic polyisocyanate is used.

As the aliphatic polyisocyanate, 1,6-hexamethylene diisocyanate, trimethylhexamethylene diisocyanate, lysine diisocyanate, dimer acid diisocyanate, tetramethylene diisocyanate, 1,5-pentamethylene diisocyanate, ethylene diisocyanate, and dodecamethylene diisocyanate are preferable.

Examples of the modified product of aliphatic polyisocyanate include aliphatic polyisocyanate trimer (isocyanurate, and a prepolymer which is a reaction product of an aliphatic polyisocyanate and a polyol.

Examples of the polyol include polyester polyol, polyether polyol, polycarbonate polyol, polybutadiene polyol, hydrogenated polybutadiene polyol, acrylic polyol, polycaprolactone polyol, and aliphatic polyhydric alcohol having 1 to 20 carbon atoms.

The polyols may be used alone or in combination of two or more thereof.

As the polyol, from the viewpoint that heat storage particles in which the material for heat storage is not easily exuded and which has high mechanical strength are easily obtained, a polybutadiene polyol or hydrogenated polybutadiene polyol is preferable.

The hydroxy value of the polybutadiene polyol or hydrogenated polybutadiene polyol is preferably 25 to 80 KOHmg/g and more preferably 30 to 75 KOHmg/g. In a case where the hydroxy value is equal to or greater than the lower limit of the above range, heat storage particles having good bleeding properties are easily obtained. In a case where the hydroxy value is equal to or less than the upper limit of the above range, heat storage particles having high mechanical strength are easily obtained.

The hydroxy value can be measured by an acetic anhydride-pyridine method. The acetic anhydride-pyridine method is a method in which for a sample having a hydroxy group, a pyridine solution containing acetic anhydride is used, the hydroxy group is acetylated under pyridine reflux, excessive acetic anhydride is hydrolyzed with water, and then the formed acetic acid is titrated with a standard solution of sodium hydroxide.

As the polybutadiene polyol, a polybutadiene polyol having two or more hydroxy groups at the molecular terminal and being liquid at normal temperature (25°C) may be exemplified. Examples of commercially available products of the liquid polybutadiene polyol include NISSO-PB (registered trademark) G-1000, G-2000, and G-3000, manufactured by Nippon Soda Co., Ltd., and Poly bd (registered trademark), manufactured by Idemitsu Kosan Co., Ltd.

As the hydrogenated polybutadiene polyol, a hydrogenated polybutadiene polyol obtained by reduction hydrogen of polybutadiene polyol or polybutadiene polycarboxylic acid and being liquid at normal temperature (25°C) is exemplified. Examples of commercially available products of the liquid polybutadiene polyol include NISSO-PB (registered trademark) GI-1000, GI-2000, and GI-3000, manufactured by Nippon Soda Co., Ltd., and KRASOL HLBP-H 1000, HLBP-H 2000, and HLBP-H 3000, manufactured by CRAY VALLEY.

As the polyol, from the viewpoint that the material for heat storage is not easily exuded and heat storage particles having high mechanical strength are easily obtained, an aliphatic polyhydric alcohol having 1 to 20 carbon atoms is preferable.

Examples of the aliphatic polyhydric alcohol having 1 to 20 carbon atoms include ethylene glycol, 1,2-propanediol, 1,3-propanediol, 1,3-butanediol, 1,4-butanediol, 1,5-pentanediol, 1,6-hexanediol, neopentyl glycol, diethylene glycol, triethylene glycol, tetraethylene glycol, dipropylene glycol, tripropylene glycol, 3-methyl-1,5-pentanediol, 2-butyl-2-ethyl-1,3-propanediol, 2-methyl-1,3-propanediol, trimethylolpropane, trimethylolethane, glycerine, pentaerythritol, and sorbitol.

Examples of the polyvalent amine include aliphatic polyvalent amines such as ethylenediamine, tetramethylenediamine, octamethylenediamine, decamethylenediamine, piperazine, diethylenetriamine, triethylenetetramine, dihexamethylenetriamine, and 1,4-diaminocyclohexane, and aromatic polyvalent amines such as paraphenylenediamine, metaphenylenediamine, paraxylylenediamine, metaxylylenediamine, 4,4'-diaminobiphenyl, and 4,4'-diaminodiphenylmethane.

The preferable ratio of each of the constitutional unit derived from the polyisocyanate the constitutional unit derived from the polyol, and the constitutional unit derived from the polyvalent amine in the polyurethane polyurea is the same as the preferable preparation ratio of each of a polyisocyanate, a polyol, and a polyvalent amine in a method for producing the heat storage particles described later.

Examples of other components that may be included in the shell portion include resins other than polyurethane-polyurea, rubber, fillers, function-imparting agents, and unavoidable impurities.

The content of other components is preferably 10 parts by mass or less, more preferably 3 parts by mass or less, and particularly preferably 0 parts by mass with respect to 100 parts by mass of the polyurethane polyurea.

### (Outermost Layer)

The outermost layer that the heat storage particle may have is a layer for imparting a function such as heat resistance, solvent resistance, water resistance, or the like to the heat storage particle.

Examples of a material constituting the outermost layer include thermoplastic resins, cured products of curable resins, and inorganic compounds.

### (Action Mechanism)

Since the shell portion of the heat storage particle of the present invention described above includes polyurethane polyurea and the volume average particle diameter of the heat storage particles is 100 µm or more, even in a case of repeating heating and cooling, the material for heat storage of the core portion is not easily exuded. In addition, the mechanical strength of the shell portion is increased and the shell portion is not easily damaged by compression or the like.

Further, since the core portion of the heat storage particle of the present invention described above includes the material for heat storage and the volume average particle diameter of the heat storage particles is 100 µm or more, the heat storage amount of the heat storage particle becomes sufficiently large.

Since the volume average particle diameter of the heat storage particles is 500 µm or less in the heat storage particles of the present invention described above, in a case where a heat storage material including the heat storage particles and another material (a building material, a medium, or the like) is made, the heat storage particles are not noticeable and the external appearance of the heat storage material is good.

### <Method for Producing Heat Storage Particles>

A method for producing the heat storage particles of the present invention is a method including dispersing a raw material composition containing a material for heat storage, a polyisocyanate, and a polyol in a dispersion medium containing water and causing interface polymerization at the interface between the raw material composition and the dispersion medium.

As the method for producing the heat storage particles, specifically, the following methods are used.

Method (α): a method in which a raw material composition including a material for heat storage, a polyisocyanate, a polyol, and if necessary, other components is dispersed in a dispersion medium containing water, the polyisocyanate, the polyol, and water are allowed to react at the interface between the raw material composition and the dispersion medium, and a shell portion containing polyurethane polyurea is formed around a core portion containing the material for heat storage.

Method (β):a method in which a raw material composition including a material for heat storage, a polyisocyanate, a polyol, and if necessary, other components is dispersed in a dispersion medium containing water, the polyisocyanate, the polyol, the polyvalent amine, and water at the interface between the raw material composition and the dispersion medium are allowed to react by adding a polyvalent amine to the dispersion liquid, and a shell portion containing polyurethane polyurea is formed around a core portion containing the material for heat storage.

In the method (α), a urethane bond is formed through the reaction of the isocyanate group of the polyisocyanate and the hydroxy group of the polyol. In addition, two isocyanate groups and one water molecule are allowed to react to form a urea bond.

In the method (β), a urethane bond is formed through the reaction of the isocyanate group of the polyisocyanate and the hydroxy group of the polyol. In addition, the isocyanate group of the polyisocyanate and the amino group of the polyvalent amine are allowed to react to form a urea bond. Further, two isocyanate groups and one water molecule are allowed to react to form a urea bond.

As the method for producing the heat storage particle, from the viewpoint of further increasing the mechanical strength of the shell portion, the method (β) is preferable.

The preparation ratio of the polyisocyanate is preferably 5% to 98.5% by mass and more preferably 45% to 96.5% by mass with respect to 100% by mass of total of the polyisocyanate, the polyol, and the polyvalent amine. In a case where the preparation ratio of the polyisocyanate is in the above range, the mechanical strength of the shell portion is increased.

The preparation ratio of the polyol is preferably 1% to 80% by mass and more preferably 2% to 50% by mass with respect to 100% by mass of total of the polyisocyanate, the polyol, and the polyvalent amine. In a case where the preparation ratio of the polyol is in the above range, heat storage particles having good bleeding properties are easily obtained.

In a case where the polyvalent amine is prepared, the preparation ratio of the polyvalent amine is preferably 0.5% to 15% by mass and more preferably 1.5% to 14% by mass with respect to 100% by mass of total of the polyisocyanate, the polyol, and the polyvalent amine. In a case where the preparation ratio of the polyvalent amine is in the above range, heat storage particles having good bleeding properties are easily obtained.

The ratio of the constitutional unit derived from the polyisocyanate is preferably 5% to 98.5% by mass and more preferably 45% to 96.5% by mass with respect to the total constitutional units constituting the polyurethane polyurea. In a case where the ratio of the constitutional unit derived from the polyisocyanate is in the above range, the mechanical strength of the shell portion is increased.

The ratio of the constitutional unit derived from the polyol is preferably 1% to 80% by mass and more preferably 2% to 50% by mass with respect to the total constitutional units constituting the polyurethane polyurea. In a case where the ratio of the constitutional unit derived from the polyol is in the above range, heat storage particles having good bleeding properties are easily obtained.

In a case where the polyvalent amine is prepared, the ratio of the constitutional unit derived from the polyvalent amine is preferably 0.5% to 15% by mass and more preferably 1.5% to 14% by mass with respect to the total constitutional units constituting the polyurethane polyurea. In a case where the ratio of the constitutional unit derived from the polyvalent amine is in the above range, heat storage particles having good bleeding properties are easily obtained.

It is preferable that the dispersion medium includes a dispersing agent.

Examples of the dispersing agent include cellulose water-soluble resins (such as methyl cellulose, hydroxyethyl cellulose, hydroxypropyl methyl cellulose, and carboxymethyl cellulose), polyvinyl alcohols, polyacrylates, polyethylene glycols, polyvinyl pyrrolidones, polyacrylamides, tertiary phosphates, and colloidal silica. The dispersing agents may be used alone or in combination of two or more thereof.

The content of the dispersing agent is preferably 0.001 to 5 parts by mass, more preferably 0.01 to 4 parts by mass, and even more preferably 0.1 to 3.5 parts by mass with respect to 100 parts by mass of water. In a case where the content of the dispersing agent is in the above range, the dispersion state of the raw material composition in the dispersion liquid can be sufficiently stabilized.

The dispersion medium may include a surfactant since the dispersion state of the raw material composition in the dispersion liquid can be sufficiently stabilized.

Examples of the surfactant include anionic surfactants, cationic surfactants, nonionic surfactants, and ampholytic surfactants. The surfactants may be used alone or in combination of two or more thereof.

The raw material composition may include a urethanization catalyst.

Examples of the urethanization catalyst include metal-based catalysts such as dibutyltin laurate, and amine-based catalysts such as trimethylamine.

The polymerization temperature is preferably 30°C to 90°C.

The polymerization time is preferably 1 to 24 hours.

At the time of polymerization, the dispersion liquid is preferably stirred using stirring.

The heat storage particles in the dispersion liquid are collected by a solid-liquid separation method such as filtration.

The collected heat storage particles are preferably dried after being washed.

An outermost layer may be formed on the surface of the heat storage particles by a known method.

### (Action Mechanism)

Since the method for producing the heat storage particles of the present invention described above is a method including dispersing a raw material composition containing a material for heat storage, a polyisocyanate, and a polyol in a dispersion medium containing water, heat storage particles having a core portion containing the material for heat storage and a shell portion containing polyurethane polyurea and a volume average particle diameter of 100 to 500 µm can be produced.

### <Heat Storage Material>

A heat storage material of the present invention includes heat storage particles of the present invention.

The heat storage particles of the present invention may be used as a heat storage material without any change, a mixture obtained by mixing the heat storage particles of the present invention and another material may be used as a heat storage material, or a material formed by sealing the heat storage particle of the present invention or a mixture thereof with a packaging material may be used as a heat storage material.

Examples of another material include building materials (such as a plaster, diatomaceous earth, gypsum, concrete, and asphalt), mediums (such as heat medium), gel, resins, rubber, and activated carbon.

A heat storage material formed of a mixture of the heat storage particles and a building material can be used for, for example, a coating material for wall surfaces and a structural material such as a structure. FIG. 2 is a cross-sectional view showing a coating wall which is an example of a heat storage material according to the present invention. A coating wall 20 is formed by applying a coating material including the heat storage particles 10 and a plaster 22 to the surface of a gypsum board 24 and drying the coating material.

A heat storage material formed of a mixture of the heat storage particles and a medium can be allowed to pass through and circulate in a pipe in an air conditioning facility or the like.

The content of the heat storage particles in the mixture of the heat storage particles and another material is preferably 0.1% to 50% by mass and more preferably 1% to 30% by mass with respect to 100% by mass of the mixture.

The heat storage material in which the heat storage particle or a mixture thereof is sealed with a packaging material can be used as temperature control means for conveying containers, building materials, and the like. Examples of the packaging material include materials disclosed in PCT International Publication No. WO2011/78340.

### (Application of Heat Storage Material)

Examples of application of the heat storage material include the following applications:
heat pumps; air conditioning application for buildings, houses, underground malls, and the like; vehicle air conditioning and canister application; temperature rise prevention application for electronic parts such as an IC chip; thermostatic application for clothes; cold storage application for fresh food or organ transport containers; constant temperature application for structural materials in structures (such as a house and a building) and structures (such as a road and a bridge); anti-fogging applications such as curved mirrors; anti-freezing application for a road surface; cooling and constant temperature application for home electric appliances such as a refrigerator; and application for a cold insulator and a heating pad as life supplies.

### (Action Mechanism)

In the heat storage material of the present invention described above, the heat storage particles of the present invention in which the shell portion is not easily damaged and the material for heat storage of the core portion is not easily exuded are used, and thus a large heat storage amount can be maintained for a long period of time.

In addition, in the heat storage material of the present invention described above, the heat storage particles having a volume average particle diameter of 500 µm or less are used and thus in a case where a heat storage material including the heat storage particles and another material is made, the heat storage particles are not noticeable the external appearance of the heat storage material is good.

### Examples

Hereinafter, the present invention will be described in detail using examples, but the present invention is not limited to these examples.

### <Raw Materials>

### (Material for Heat Storage)

Methyl hexadecanoate: manufactured by Toei Chemical Co., Ltd.
Methyl tetradecanoate: manufactured by Toei Chemical Co., Ltd.
Stearic acid: manufactured by Kao Corporation

### (Polyisocyanate)

Isocyanurate of 1,6-hexamethylene diisocyanate (HDI): Basonat HI-100 manufactured by BASF
Isophorone diisocyanate (IPDI): IPDI manufactured by Evonik Japan Co., Ltd.

### (Polyol)

Polybutadiene polyol 1: NISSO-PB (registered trademark) G-1000, manufactured by Nippon Soda Co., Ltd., hydroxy value: 73 KOHmg/g
Hydrogenated polybutadiene polyol: NISSO-PB (registered trademark) GI-3000, manufactured by Nippon Soda Co., Ltd., hydroxy value: 30 KOHmg/g
Polybutadiene polyol 2: Poly bd (registered trademark) R-15HT, manufactured by Idemitsu Kosan Co., Ltd., hydroxy value: 102.7 KOHmg/g
Ethylene glycol: manufactured by Mitsubishi Chemical Corporation
Polyether polyol: ADEKA Polyether BPX-55, manufactured by ADEKA Co., Ltd., polyether polyol obtained by adding propylene oxide to bisphenol A

### (Polyvalent Amine)

Ethylenediamine: manufactured by Sumitomo Seika Chemicals Co., Ltd.

### (Dispersing Agent)

Hydroxypropylmethylcellulose: METOLOSE (registered trademark) 90SH-65, manufactured by Shin-Etsu Chemical Co., Ltd.

### <Heat Storage Particle>

### (Example 1)

800 g of water was poured into a 2 L separable flask equipped with a stirrer, and 10 g of hydroxypropylmethylcellulose was dissolved in water to prepare a dispersion medium.

166.3 g of methyl hexadecanoate, 41.6 g of methyl tetradecanoate, 2.1 g of stearic acid, 81.0 g of isocyanurate of HDI, and 5.0 g of polybutadiene polyol 1 were mixed to prepare a raw material composition.

While stirring the dispersion medium at 300 rpm, the raw material composition was added to the dispersion medium to prepare a dispersion liquid. While stirring the dispersion liquid, the temperature was increased to 40°C, 14.0 g of ethylene amine was added to the dispersion liquid, and the mixture was stirred for 1 hours. The temperature of the dispersion liquid was increased to 60°C, followed by stirring for 2 hours. The temperature of the dispersion liquid was increased to 90°C, followed by stirring for 1 hour. The dispersion liquid was cooled to room temperature and particles in the dispersion liquid were collected by solid-liquid separation. The particles were sufficiently washed with water and then dried at 60°C for 20 hours to obtain heat storage particles.

### (Examples 2 to 5, Reference Example 6 and Comparative Examples 1 and 2)

Heat storage particles of Examples 2 to 5, Reference Example 6 and Comparative Examples 1 and 2 were obtained in the same manner as in Example 1 except that the kinds of raw materials and ratios thereof were changed as shown in Table 1.

### <Evaluation Method>

### (Volume Average Particle Diameter)

The volume-based median diameter of the heat storage particles measured using a laser diffraction particle size distribution measuring device (SALD-2100, manufactured by Shimadzu Corporation) was used as a volume average particle diameter. The results are shown in Table 1.

### (Latent Heat Amount)

10 mg of heat storage particles were weighed in a sample pan, the sample pan is covered with a lid to prepare a sample for measurement. The prepared sample for measurement was held at 100°C for 5 minutes, cooled from 100°C to -50°C at a rate of 10 °C/min, and held at -50°C for 5 minutes, and then the temperature was increased from -50°C to 100°C at a rate of 10 °C/min using a differential scanning calorimeter (DSC, DSC 204 F1 Phoenix, manufactured by NETZSCH). From the obtained DSC chart, the fusion heat amount of the heat storage material was obtained according to JIS K 7121 and the latent heat amount of the heat storage particles was calculated. In the present invention, the larger the latent heat amount is, the more preferable it is, and a latent heat amount of 130 J/g or more can be determined as a favorable latent heat amount. The results are shown in Table 1.

### (Bleeding Properties)

Approximately 10 g of heat storage particles were used as a sample. The sample was placed in a thermostatic bath in which the temperature inside the thermostatic bath was programmed to repeat a cycle of the following 1) to 4) 100 times.
1) The inside of the thermostatic bath was held at 60°C for 30 minutes.
2) The inside of the thermostatic bath was cooled from 60°C to -20°C at a cooling rate of 2 °C/min.
3) The inside of the thermostatic bath was held at -20°C for 30 minutes.
4) The temperature inside the thermostatic bath was increased from -20°C to 60°C at a temperature rising rate of 2 °C/min.

After 100 cycles, the sample was taken out and sufficiently cooled. Then, whether or not the material for heat storage was exuded was visually observed and evaluated based on the following standards. The results are shown in Table 1.
A (good): Exudation of the material for heat storage was not observed.
B (allowable): Slight exudation of the material for heat storage was observed.
C (poor): Exudation of the material for heat storage was clearly observed.

### (Particle Strength)

One particle was taken out from the heat storage particles and used as a sample. The particle strength of the sample was evaluated in the following procedure using a with a thermomechanical analyzer (Thermo plus EVO TMA 8310, manufactured by Rigaku Corporation). The results are shown in Table 1.
1) The sample was held at 35°C for 1 hour.
2) A constant speed load was applied to the sample at 100 mN/min.
3) From the measured result, the load at the tangent intersection point of the point where the displacement slope became maximum was defined as the particle strength.

### (External Appearance of Coating Wall)

1 kg of heat storage particles were added to 4 kg of plaster and the materials were stirred for 30 seconds with an electric mixer to obtain a powder mixture. 2 to 3 L of water was added to the powder mixture and the materials were stirred for 120 seconds with an electric mixer to obtain a coating material. The coating material was applied onto the surface of a gypsum board using a plaster iron and cured to form a coating wall. The external appearance of the coating wall was visually observed and evaluated based on the following standards. The results are shown in Table 1.
O (good): Surface roughness due to the heat storage particles was not recognized.
X (poor): Surface roughness due to the heat storage particles was recognized.

**[Table 1]**

| | | | Example | | | | | | Comparative Example | |
|---|---|---|---|---|---|---|---|---|---|---|
| | | | 1 | 2 | 3 | 4 | 5 | 6^{∗} | 1 | 2 |
| Core portion raw material (% by mass) | Methyl hexadecanoate | | 79.2 | 79.2 | 79.2 | 79.2 | 100 | 100 | 79.2 | 79.2 |
| | Methyl tetradecanoate | | 19.8 | 19.8 | 19.8 | 19.8 | - | - | 19.8 | 19.8 |
| | Stearic acid | | 1.0 | 1.0 | 1.0 | 1.0 | - | - | 1.0 | 1.0 |
| Shell portion raw material (% by mass) | Polyisocyanate | Isocyanurate of HDI | 81.0 | 81.0 | 81.0 | 81.0 | 81.0 | - | 81.0 | 81.0 |
| | | IPDI | - | - | - | - | - | 81.0 | - | - |
| | Polyol | Polybutadiene polyol 1 | 5.0 | - | - | - | - | 5.0 | 5.0 | 5.0 |
| | | Hydrogenated polybutadiene polyol | - | 5.0 | - | - | - | - | - | - |
| | | Polybutadiene polyol 2 | - | - | 5.0 | - | - | - | - | - |
| | | Ethylene glycol | - | - | - | 5.0 | - | - | - | - |
| | | Polyether polyol | - | - | - | - | 5.0 | - | - | - |
| | Polyvalent amine | Ethylenediamine | 14.0 | 14.0 | 14.0 | 14.0 | 14.0 | 14.0 | 14.0 | 14.0 |
| Dispersion medium | Content of dispersing agent (parts by mass/100 parts by mass of water) | | 1.3 | 1.3 | 1.3 | 1.3 | 1.3 | 1.3 | 2.5 | 1.0 |
| Evaluation | Volume average particle diameter (µm) | | 215 | 270 | 210 | 260 | 220 | 365 | 60 | 850 |
| | Latent heat amount (J/g) | | 140 | 140 | 140 | 140 | 160 | 160 | 120 | 140 |
| | Bleeding properties | | A | A | A | A | B | B | C | A |
| | Particle strenqth (mN) | | 120 | 130 | 90 | 120 | 120 | 90 | 60 | 150 |
| | External appearance of coating wall | | O | O | O | O | O | O | O | X |

| | | | | | | | | | | |
|---|---|---|---|---|---|---|---|---|---|---|
| ^{∗}Reference Example | | | | | | | | | | |

In the heat storage particles of Examples 1 to 5 and Refence Example 6 which had the shell portion containing polyurethane polyurea and had a volume average particle diameter of 100 to 500 µm, the material for heat storage was not easily exuded and the mechanical strength was high.

In addition, the external appearance of the coating walls including the heat storage particles of Examples 1 to 5 and Reference Example 6 was good.

In the heat storage particles of Comparative Example 1 in which the volume average particle diameter was less than 100 µm, the material for heat storage was easily exuded and the mechanical strength was low. In addition, the latent heat amount was small.

The external appearance of the coating wall including the heat storage particles of Comparative Example 2 in which the volume average particle diameter was greater than 500 µm was not good.

### Industrial Applicability

The heat storage particles of the present invention are useful as a material for imparting heat storage properties on a building material, a medium, or the like.

### Reference Signs List

- 10:: heat storage particle
- 12:: core portion
- 14:: shell portion
- 20:: coating wall
- 22:: plaster
- 24:: gypsum board

## Claims

1. Heat storage particles comprising:
a core portion containing a material for heat storage; and
a shell portion containing polyurethane polyurea,
wherein a volume average particle diameter is 100 to 500 µm,
the polyurethane polyurea has a constitutional unit derived from a modified aliphatic polyisocyanate of an isocyanurate type.

2. The heat storage particles according to claim 1,
wherein the polyurethane polyurea has a constitutional unit derived from a polybutadiene polyol or hydrogenated polybutadiene polyol having a hydroxy value of 25 to 80 KOHmg/g.

3. The heat storage particles according to claim 1 or 2,
wherein the polyurethane polyurea has a constitutional unit derived from an aliphatic polyhydric alcohol having 1 to 20 carbon atoms.

4. A method for producing the heat storage particles according to any one of claims 1 to 3, the method comprising:
dispersing a raw material composition including a material for heat storage, a polyisocyanate, and a polyol in a dispersion medium containing water.

5. A heat storage material comprising:
the heat storage particles according to any one of claims 1 to 3.

## Patentansprüche

1. Wärmespeicherteilchen umfassend:
einen Kernteil, der ein Material für Wärmespeicherung enthält; und
einen Schaleteil, der Polyurethan-Polyharnstoff enthält,
wobei ein volumengemittelter Teilchendurchmesser 100 bis 500 µm ist,
der Polyurethan-Polyharnstoff eine strukturelle Einheit abgeleitet aus einem modifizierten aliphatischen Polyisocyanat eines Isocyanurat-Typs aufweist.

2. Wärmespeicherteilchen gemäß Anspruch 1,
wobei der Polyurethan-Polyharnstoff eine strukturelle Einheit abgeleitet aus einem Polybutadiene-Polyol oder hydriertem Polybutadiene-Polyol mit einem Hydroxylwert von 25 bis 80 KOHmg/g aufweist.

3. Wärmespeicherteilchen gemäß Anspruch 1 oder 2,
wobei der Polyurethan-Polyharnstoff eine strukturelle Einheit abgeleitet aus einem aliphatischen mehrwertigen Alkohol mit 1 bis 20 Kohlenstoffatomen aufweist.

4. Verfahren zum Herstellen der Wärmespeicherteilchen gemäß einem der Ansprüche 1 bis 3, wobei das Verfahren umfasst:
Dispergieren einer Rohmaterialzusammensetzung, die ein Material für Wärmespeicherung, ein Polyisocyanat, und ein Polyol beinhaltet, in einem Dispergiermedium, das Wasser enthält.

5. Wärmespeichermaterial umfassend:
die Wärmespeicherteilchen gemäß einem der Ansprüche 1 bis 3.

## Revendications

1. Particules de stockage de chaleur comprenant :
une partie de cœur contenant un matériau pour le stockage de chaleur ; et
une partie de gaine contenant une polyuréthane-polyurée,
dans lesquelles le diamètre moyen en volume des particules est de 100 à 500 µm,
la polyuréthane-polyurée a un motif constitutif dérivé d'un polyisocyanate aliphatique modifié de type isocyanurate.

2. Particules de stockage de chaleur selon la revendication 1,
dans lesquelles la polyuréthane-polyurée a un motif constitutif dérivé d'un polybutadiène-polyol ou d'un polybutadiène-polyol hydrogéné ayant un indice d'hydroxyle de 25 à 80 mg KOH/g.

3. Particules de stockage de chaleur selon la revendication 1 ou 2,
dans lesquelles la polyuréthane-polyurée a un motif constitutif dérivé d'un alcool polyvalent aliphatique ayant 1 à 20 atomes de carbone.

4. Procédé pour produire les particules de stockage de chaleur selon l'une quelconque des revendications 1 à 3, le procédé comprenant :
la dispersion d'une composition de matière première contenant un matériau pour le stockage de chaleur, un polyisocyanate, et un polyol, dans un milieu de dispersion contenant de l'eau.

5. Matériau de stockage de chaleur comprenant :
les particules de stockage de chaleur selon l'une quelconque des revendications 1 à 3.
